Europäisches Patentamt

European Patent Office

Office européen des brevets

(11) Veröffentlichungsnummer: **0 266 785 B1**

# EUROPÄISCHE PATENTSCHRIFT

(45) Veröffentlichungstag der Patentschrift: **03.04.91**

(21) Anmeldenummer: **87116389.5**

(22) Anmeldetag: **05.11.87**

(51) Int. Cl.5: **E02F 9/08, E02F 9/12,**
**E02F 9/18, E02F 9/24,**
**E02F 9/22, B60G 17/00**

(54) **Selbstfahrendes Vielzweckgerät.**

(30) Priorität: **05.11.86 DE 3637709**

(43) Veröffentlichungstag der Anmeldung:
**11.05.88 Patentblatt 88/19**

(45) Bekanntmachung des Hinweises auf die
Patenterteilung:
**03.04.91 Patentblatt 91/14**

(84) Benannte Vertragsstaaten:
**AT BE DE ES FR GB IT NL SE**

(56) Entgegenhaltungen:
**DE-A- 1 630 342      DE-A- 2 450 236**
**DE-A- 3 301 847      FR-A- 2 348 095**
**GB-A- 1 190 212      GB-A- 1 548 665**
**US-A- 4 099 733      US-A- 4 236 591**

(73) Patentinhaber: **Ahlmann-Maschinenbau GmbH**
**Am Friedrichsbrunnen 2 Postfach 725**
**W-2370 Rendsburg(DE)**

(72) Erfinder: **Kratz, Hans, Ing.grad.**
**Timm Kröger Strasse 2**
**W-2370 Büdelsdorf(DE)**

(74) Vertreter: **Dipl.-Ing. H. Hauck, Dipl.-Ing. E.**
**Graalfs, Dipl.-Ing. W. Wehnert, Dr.-Ing. W. Dö-**
**ring**
**Neuer Wall 41**
**W-2000 Hamburg 36(DE)**

## Beschreibung

Die Erfindung bezieht sich auf ein selbstfahrendes Vielzweckgerät gemäß Oberbegriff des Patentanspruchs 1 oder 3. Ein derartiges Gerät ist aus der DE-A-2 450 236 bekannt.

Es ist ein Ladebagger bekanntgeworden, der aus einem Vorder- und einem Hinterwagen besteht, die über ein Knickpendelgelenk miteinander verbunden sind. Die Fahrerkabine befindet sich auf dem Hinterwagen und der Ausleger an dem unterschiedliche Arbeitsgeräte, beispielsweise eine Ladeschaufel, anbringbar sind, ist am Vorderwagen gelagert. Die Achsen an Vorder- und Hinterwagen sind starr gelagert. Die Lenkung erfolgt über hydraulische Lenkzylinder, mit denen der Vorderwagen gegenüber dem Hinterwagen verschwenkt wird. Ein Verschwenken des Auslegers ist nicht möglich. Derartige Knicklader können nur mit relativ geringer Geschwindigkeit gefahren werden.

Es sind ferner sogenannte Schwenklader bekannt, bei denen ein starrer Rahmen mit vier Laufrädern versehen ist. Die Hinterachse ist pendelnd aufgehängt, um eine Geländegängigkeit herzustellen. Der Schwenkarm ist über einen Drehkranz ±90° verschenkbar. Die Lenkung erfolgt über die Hinterachse, die nicht gefedert ist. Auch derartige Schwenklader haben nur eine relativ geringe Fahrgeschwindigkeit. Die Schwenkbarkeit des Auslegers vergrößert zwar den Arbeitsbereich frontal und beidseitig neben dem Gerät ohne aufwendige Lenkmanöver; ein Knicklader hat einen kleineren Wendekreis und das Lenkverhalten ist einfacher.

Der Erfindung liegt die Augabe zugrunde, ein vielseitig einsetzbares, selbstfahrendes Vielzweckgerät zu schaffen, das bei gutem Lenkverhalten im Straßengang mit großer Geschwindigkeit gefahren werden kann und andererseits im Arbeitsbetrieb eine gute Geländegängigkeit aufweist.

Diese Aufgabe wird durch die Merkmale des Kennzeichnungsteils des Patentanspruchs 1 gelöst.

Beim erfindungsgemäßen Vielzweckgerät ist ein verschwenkbarer Oberwagen vorgesehen, der den Schwenkarm bzw. den Ausleger trägt. Es weist ferner ein an sich bekanntes Knickpendelgelenk auf. Erfindungsgemäß ist nun zwischen Hinter- und Vorderwagen ein doppelt wirkender oder sind zwei einfach wirkende Blockierzylinder angeordnet. Dem Oberwagen ist eine mit einem Steuerventil verbundene Meßfühleranordnung zugeordnet. Die Meßfühleranordnung ermittelt den Winkelausschlag des Oberwagens und damit des Auslegers. Erreicht der Schwenkwinkel einen vorgegebenen Wert, verbindet das Blockiersteuerventil den oder die Blockierzylinder mit einem oder mehreren Hubzylindern des Auslegers. Auf diese Weise wird verhindert, daß das erfindungsgemäße Gerät umkippt, wenn der Ausleger zur Seite schwenkt. Die Blockierung im Blockierzylinder ist dabei lastabhängig. Die am Ausleger wirkende Last beeinflußt den Druck im Hubzylinder und dieser wiederum den Druck im Blockierzylinder. Die Blockierzylinder verhindern ein Pendeln von Vorderwagen und Hinterwagen relativ zueinander, während sie jedoch eine Lenkung um die vertikale oder Knickachse weiterhin zulassen.

Es sind verschiedene konstruktive Möglichkeiten denkbar, den Schwenkwinkel des Oberwagens bzw. des Auslegers zu ermitteln. Eine Ausgestaltung der Erfindung sieht dazu vor, daß mit dem Drehkranz Nocken verbunden sind, die mit einem Nockenfolger zusammenwirken, der seinerseits auf das Blockierventil wirkt.

Bei dem erfindungsgemäßen Vielzweckgerät ist ferner mindestens die Vorderachse mittels Längslenkern am Rahmen des Vorderwagens pendelnd aufgehängt. Sie ist mittels Stützzylindern am Rahmen vo Vorderwagen abgestützt. Die Stützzylinder sind über eine Steuerventilanordnung mit hydropneumatischen Speichern verbunden. Die hydropneumatischen Speicher bilden eine Feder, so daß eine federnde Abstützung der Radachsen gegeben ist. Diese ermöglicht, daß das erfindungsgemäße Gerät auf mehr oder weniger ebenen Fahrbahnen mit relativ hoher Geschwindigkeit (zum Beispiel bis 60 km/h) gefahren werden kann. Die Steuerventi lanordnung ist darüber hinaus mit dem Schaltgetriebe verbunden. Wird das Schaltgetriebe in den Straßengang geschaltet, erfolgt die beschriebene Verbindung der Stützzylinder mit den Speichern. Wird hingegen auf Arbeitsgang geschaltet, werden die Stützzylinder von den Speichern abgetrennt und bilden nunmehr eine starre Abstützung der Radachse.

Wenn nach einer Ausgestaltung der Erfindung auch die Hinterachse pendelnd aufgehängt und mittels Stützzylindern abgestützt ist, ist ein zweites, mit dem Schaltgetriebe verbundenes Blockierventil vorgesehen, das die Blockierzylinder in den Blockierzustand überführt, wenn das Schaltgetriebe in den Arbeitsgang geschaltet wird.

Bei einer alternativen Ausgestaltung zur Lösung der erfindungsgemäßen Aufgabe sind Hinter- und Vorderwagen über ein Knickgelenk miteinander verbunden. Dem Oberwagen ist wiederum eine auf die Auslenkung ansprechende, mit einer Steuerventilanordnung verbundene Meßfühleranordnung zugeordnet. Im Straßengang sind die Stützzylinder für die Vorderachse mit hydropneumatischen Speichern verbunden. Im Arbeitsgang hingegen werden die Stützzylinder blockiert, wenn der Oberwagen einen ersten vorgegebenen Schwenkwinkel überschreitet. Auch auf diese Weise wird verhindert, daß das erfindungsgemäße Gerät umkippt, wenn der Ausleger zur Seite schwenkt und im Betrieb ist. Ist die Hinterachse auch mittels Stützzylinder abgestützt, werden diese ebenfalls vom Speicher getrennt,aber miteinander verbunden, so daß die Hinterachse frei pendeln kann, um die Geländegängigkeit zu erhalten. Erreicht der Schwenkwinkel indessen einen zweiten größeren Winkelwert, werden auch die Stützzylinder der Hinterachse blockiert, damit ein Umkippen verhindert wird. Man erkennt, daß bei der zweiten alternativen Ausführungsform die Funktion des Pendelgelenks bei der ersten Ausführungsform durch die miteinander verbundenen Stützzylinder der Hinterachse ersetzt wird. Besondere Blockierzylinder, die bei einem Knickpendelgelenk erforderlich sind, um einen weiten Schwenkbereich bei ausreichender Belastungskapazität zuzulassen, können bei der zweiten Ausführungsform entfallen.

Das erfindungsgemäße Vielzweckgerät ist für die unterschiedlichsten Einsatzzwecke geeignet, beispielsweise für den Straßenbau, den Rohrleitungs- und Kabelbau,für Winterdienstarbeiten, Transportzwecke, Ladearbeiten, Tiefbau- und Aufbrucharbeiten, für den Einsatz als Kran und Gabelstapler usw. Es kann mit großer Geschwindigkeit von einer Einsatzstelle zur anderen fahren. Auf der Einsatzstelle zeichnet es sich durch große Beweglichkeit und ausgezeichnete Geländegängigkeit aus.

Um eine Stabilisierung der mittels Längslenker gelagerten Achsen zu erhalten, ist nach einer Ausgestaltung der Erfindung zwischen der Achse und dem Rahmen ein Querlenker angeordnet.

Zur Anpassung an das Gelände während eines Arbeitsvorgangs, beispielsweise beim Baggern, sieht eine Ausgestaltung der Erfindung vor, daß der Steuerventilanordnung eine Handbetätigung zugeordnet ist, über die einer der Stützzylinder mit der Druckquelle und der andere gleichzeitig mit dem Pumpensumpf verbindbar ist zur Nivellierung der Vorderachse bei abgesperrtem Speicher.

Auf diese Weise ist es möglich, das Gerät etwas anzuheben oder abzusenken, um es auf unebenem Boden horizontal auszurichten.

Das erfindungsgemäße Gerät ist für vielseitigen Einsatz an unterschiedlichen Einsatzstellen und Aufgaben konzipiert. Dies bedeutet, daß ggf. unterschiedliche Arbeitsgeräte mit dem Ausleger zu verbinden sind. Hierfür eine sogenannte Schnellwechseleinrichtung zu verwenden, ist an sich bekannt. Eine Ausgestaltung der Erfindung sieht vor, daß die Fahrerkabine auf dem schwenkbaren Oberwagen und der Antrieb auf dem Hinterwagen angeordnet sind, der Hinterwagen eine Ablagefläche für Arbeitsgeräte aufweist und der Oberwagen um einen Winkel von mindestens ±180° verschwenkbar ist. Die Ablagefläche dient dazu, die verschiedensten Arbeitsgeräte aufzunehmen. Sie können dort mit Hilfe geeigneter Vorkehrungen festgemacht werden. Dadurch, daß der Ausleger um ±180° schwenkbar ist, kann mit ihm ein abgekoppeltes Arbeitsgerät auf die Ablagefläche gelegt werden. Hierfür ist es zweckmäßig, wenn der Ausleger mit einem Haken oder dergleichen versehen ist.

Zur Verschwenkung des Oberwagens bzw. des Auslegers sieht eine weitere Ausgestaltung der Erfindung vor, daß im Unterwagen des Vorderwagens ein Ritzel mit vertikaler Achse angeordnet ist,mit dem Ritzel zwei mit dem Ober- oder Unterwagen verbundene gegenläufige hydraulisch betätigbare Zahnstangen in Eingriff sind und die Ritzelwelle fest mit dem Unter-oder Oberwagen verbunden ist. Die Zahnstangen sind an den Enden mit Hydraulikkolben verbunden, die in den entsprechenden Hydraulikzylindern angeordnet sind. Auf diese Weise ist die erwünschte Verschwenkbarkeit von ±180° zu jeder Seite auf einfache Weise gewährleistet. Um die Anzahl der zum Oberwagen über eine Drehverbindung führenden Hydraulikleitungen zu verringern, ist es zweckmäßig, die Zahnstangen mit dem Oberwagen zu koppeln.

Die Ritzelwelle kann nach einer weiteren Ausgestaltung der Erfindung auch als Drehverteiler eingesetzt werden. Zu diesem Zweck hat die Ritzelwelle eine oder mehrere axiale Bohrungen, die mit Hydraulikleitungen des Unter- oder Oberwagens verbunden sind. Die Ritzelwelle ist von einer Buchse umgeben, die mit dem Ober-oder Unterwagen verbunden ist und die innere Ringkanäle aufweist, die über Querbohrungen in der Ritzelwelle mit deren axialen Bohrungen verbunden sind. Die vom Hinterwagen kommenden Hydraulikleitungen sind entweder mit den Bohrungen der Ritzelwelle oder den zu den Ringkanälen der Buchse führenden Querbohrungen verbunden.

Die Erfundung wird nachfolgend anhand von Zeichnungen näher erläutert.

Fig. 1      zeigt schematisch in Seitenansicht ein erfindungsgemäßes Vielzweckgerät.

Fig. 2      zeigt die Draufsicht auf das Fahrgestell des Geräts nach Fig. 1.

Fig. 3      zeigt einen Hydraulikschaltplan für die Radaufhängung des Geräts nach den Figuren 1 und 2.

Fig. 4      zeigt im Schnitt bzw. in Seitenansicht die Triebverbindung zwischen Unter- und Oberwagen des Vorderwagens des Geräts nach den Figuren 1 und 2.

Fig. 5      zeigt einen Schnitt durch den unteren Teil der Darstellung nach Fig. 4 entlang der Linie 5-5.

Fig. 6      zeigt eine ähnliche Seitenansicht wie Fig. 1, jedoch mit einer konstruktiven Abweichung.

Fig. 7      zeigt eine ähnliche Darstellung wie Fig. 2, jedoch wiederum mit einer konstruktiven Abweichung.

Fig. 8     zeigt einen ähnlichen Schaltplan wie Fig. 3, jedoch für ein Vielzweckgerät nach den Figuren 6 und 7.

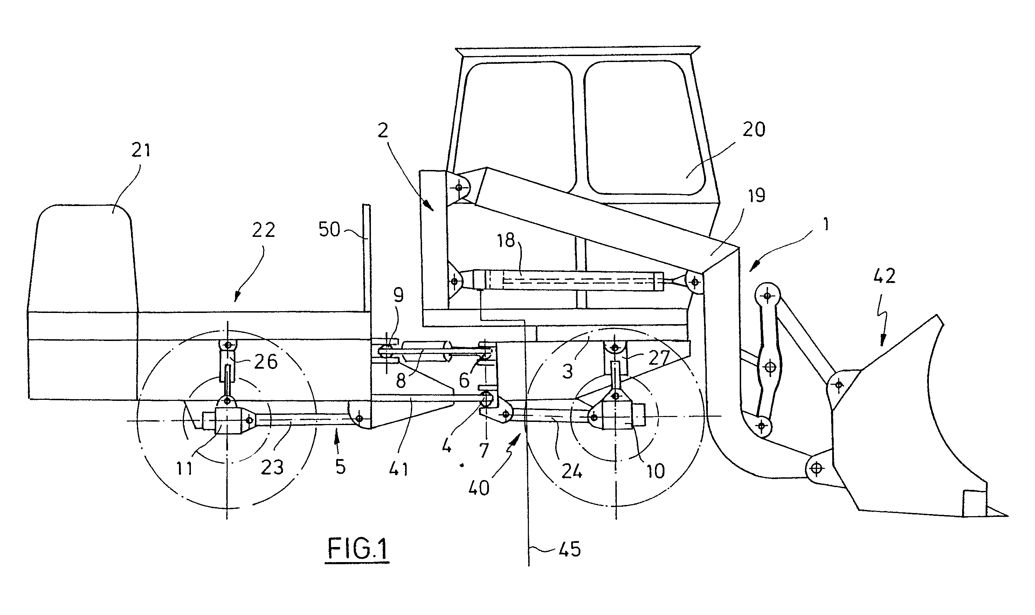

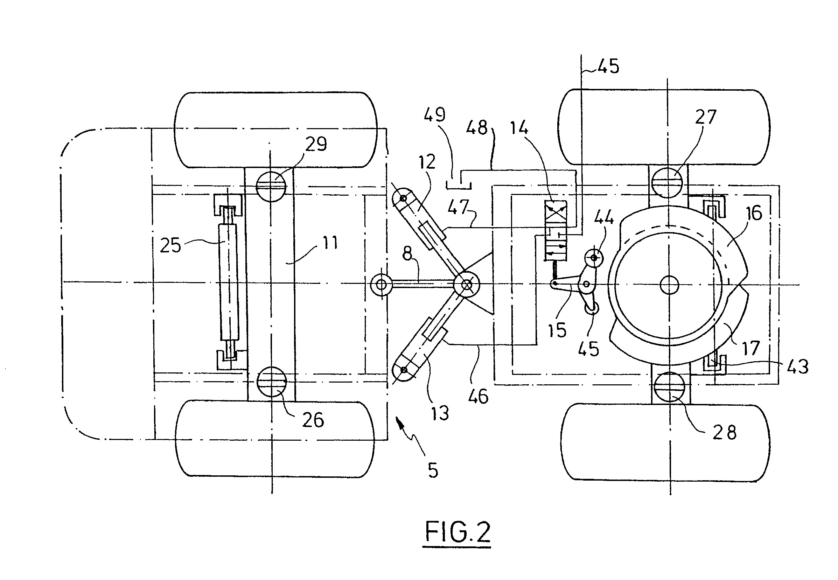

In den Figuren 1 und 2 ist ein Vielzweckgerät dargestellt, das aus einem Vorderwagen 1 und einem Hinterwagen 5 besteht. Der Vorderwagen 1 setzt sich zusammen aus einem Oberwagen 2 und einem Unterwagen 40. Der Oberwagen 2 ist auf dem Unterwagen 40 über einen Drehkranz 3 abgestützt. Der Vorderwagen 1 ist mit dem Hinterwagen 5 über ein Knickpendelgelenk verbunden. Es besitzt eine erste Pendellasche 41, die fest am Hinterwagen 5 befestigt und über ein Kugelgelenk 4 am Vorderwagen angelenkt ist. Es besitzt eine zweite Pendellasche 8, die bei 9 über ein Kugelgelenk am Hinterwagen 5 und bei 6 über ein Kugelgelenk am Vorderwagen 1 angelenkt ist. Durch die Kugelgelenke 4, 6 erstreckt sich eine gedachte vertikale Achse 7. Auf dem Oberwagen 2 befindet sich die Fahrerkabine 20. Am Oberwagen 2 ist ferner ein Ausleger 19 angelenkt. An ihm ist in bekannter Weise über eine Schnellwechseleinrichtung eine Ladeschaufel 42 angebracht. Anstelle der Ladeschaufel 42 können die verschiedensten Arbeitsgeräte wahlweise angebracht werden. Der Ausleger wird über einen Hubzylinder 18 betätigt. Eine Radachse 10 des Unterwagens 40 ist mittels Längslenkern 24 aufgehängt. Sie ist ferner mit Hilfe von Stützzylindern 27, 28 abgestützt. Ein Querlenker 43 ist einerseits mit dem Rahmen des Unterwagens 40 und andererseits mit der Achse 10 über Kugelgelenke verbunden (siehe auch Fig. 2). Mit dem Drehkranzabschnitt des Oberwagens 2 sind zwei Nocken 16, 17 höhenversetzt verbunden. Mit den Nocken 16, 17 wirken Nockenrollen 44, 45 zusammen, die an einem Hebelmechanismus 15 angebracht sind, der seinerseits mit der Schaltstange eines Blockierventils 14 zusammenwirkt. Das Blockierventil 14 ist einerseits über eine Leitung 45 mit dem Hubraum des Hubzylinders 18 verbunden. Über leitungen 46, 47 ist das Blockierventil 14 auch mit Blockierzylinder 12, 13 verbunden, die an einem Ende an der zweiten Pendellasche 8 und mit dem anderen Ende am Hinterwagen 5 angelenkt sind. Über eine Leitung 48 ist das Blockierventil 14 auch mit einem Pumpensumpf 49 verbunden.

Die Hinterachse 11 des Hinterwagens 5 ist mittels Längslenkern 23 am Rahmen angelenkt. Zwischen dem Rahmen und der Achse 11 ist ein Querlenker 25 angeordnet, der an beiden Enden über ein Kugelgelenk an Achse und Rahmen angebracht ist. Die Achse 11 ist ferner über Stützzylinder 26, 29 am Rahmen abgestützt. Antriebsaggregate 21 sind im hinteren Bereich des Hinterwagens 5 angeordnet. Sie bilden zugleich ein Kontergewicht. Der übrige Teil des Hinterwagens 5 bildet an der Oberseite eine Ablagefläche 22 für verschiedene, am Ausleger 1 anzubringende Arbeitsgeräte.

Nach vorn ist die Ablagefläche 22 durch ein hochstehendes Blech 50 begrenzt.

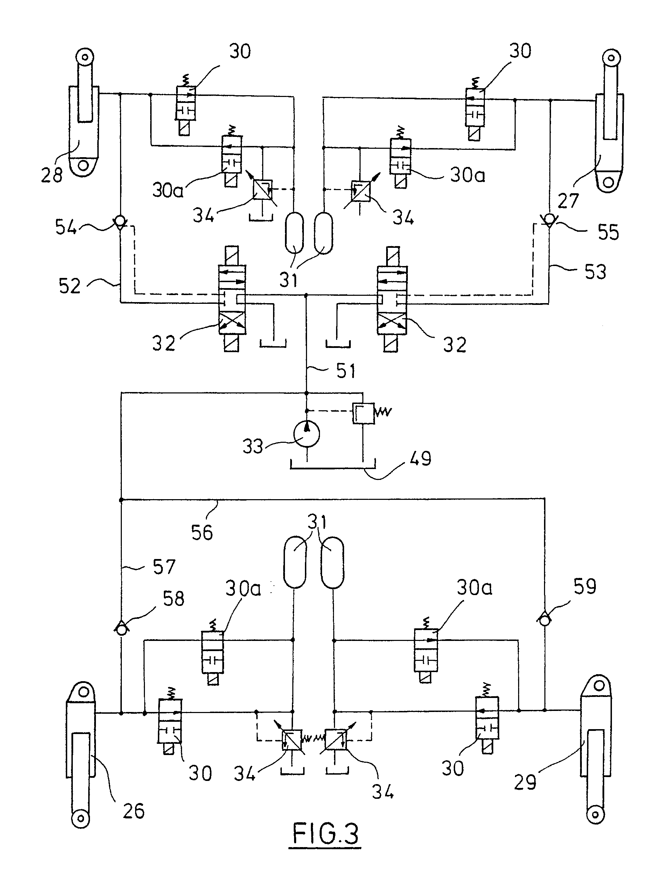

In Fig. 3 ist die Hydraulikschaltung für die Stützzylinder 26 bis 29 dargestellt. Eine Hydraulikpumpe 33 ist über eine Leitung 51 mit zwei Steuerventilen 32 verbunden, die ihrerseits über Leitungen 52, 53 mit den Stützzylindern 27, 28 verbunden sind. In den Leitungen 52, 53 befinden sich steuerbare Rückschlagventile 54, 55. An die Leitungen 52, 53 sind parallelgeschaltete Magnetsitzventile 30 bzw. 30a angeschlossen, die mit hydropneumatischen Speichern 31 verbunden sind. Diese sind ihrerseits mit Druckbegrenzungsventilen 34 verbunden. Die Pumpe 33 ist außerdem über Leitungen 56, 57 mit den Stützzylindern 26, 29 verbunden. In den Leitungen 56, 57 befinden sich Rückschlagventile 58 bzw. 59. An die Leitungen 56, 57 sind Parallelschaltungen von Magnetsitzventilen 30 bzw. 30a angeschlossen, die jeweils mit einem hydropneumatischen Speicher 31 verbunden sind. Diese sind auch wiederum mit Druckbegrenzungsventilen 34 verbunden.

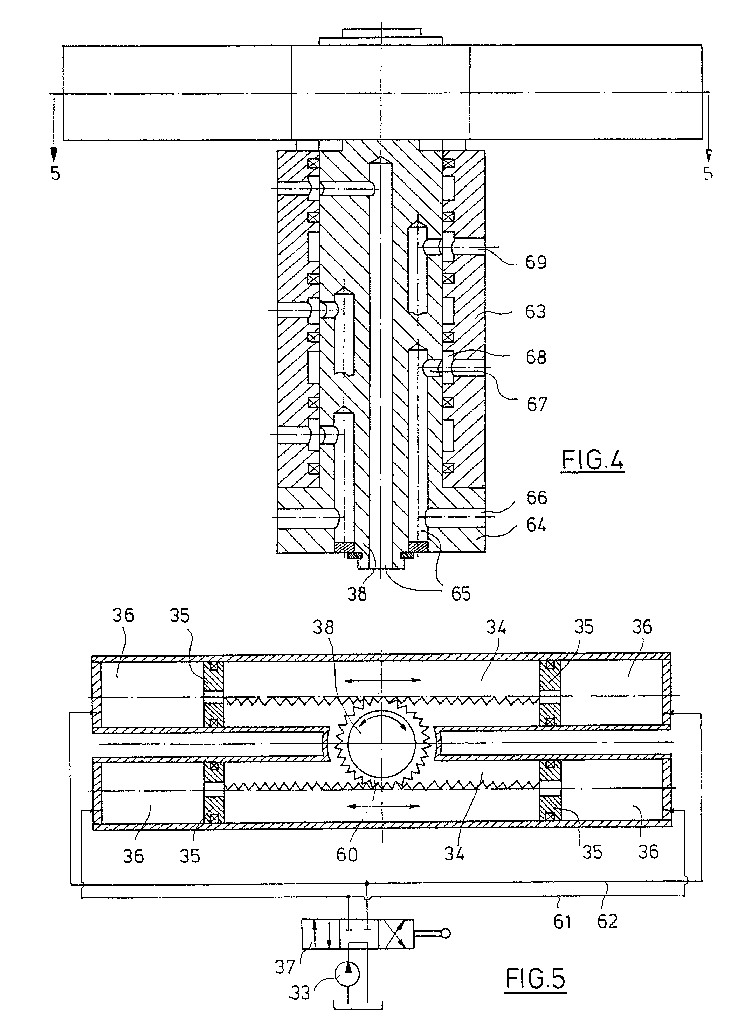

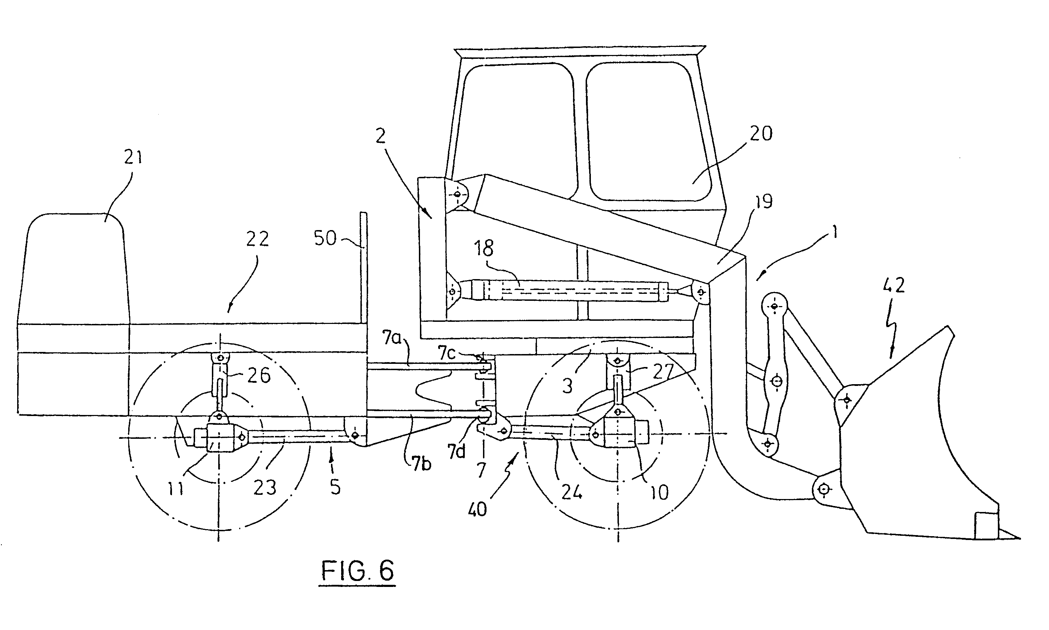

Der Oberwagen 2 des Vorderwagens 1 schwenkt um eine vertikale Welle 38, die sich durch den Drehkranz 3 hindurcherstreckt und mit dem Unterwagen 40 verbunden ist. Die Welle 38 sowie der Schwenkantrieb ist in den Figuren 4 und 5 dargestellt. Am oberen Ende sitzt auf der Welle 38 ein Ritzel 60, das mit zwei diametral gegenüberliegenden Zahnstangen 34 kämmt. Die Zahnstangen sind an den Enden mit Kolben 35 verbunden, die in Zylindern 36 angeordnet sind. Die Hydraulikpumpe 33 beaufschlagt die Hubräume der Zylinder 35 über ein Steuerventil 37 und Leitungen 61, 62 derart, daß die Zahnstangen 34 jeweils in entgegengesetzten Richtungen angetrieben werden, um die Zylinder 36 und damit den Oberwagen in der einen oder anderen Richtung zu verdrehen. Die Zahnstangen 34 sind in ihrer Länge so bemessen, daß der Oberwagen 2 um mindestens 180° verschwenkt werden kann. Auf diese Weise ist es möglich, ein vom Ausleger 19 getrenntes Arbeitsgerät mit Hilfe des Auslegers anzuheben und in Höhe der Ablagefläche 22 zu verschwenken. Das Arbeitsgerät wird auf der Ablagefläche 22 abgelegt und dort mit Hilfe nicht gezeigter Vorrichtungen gesichert.

Die Welle 38 ist mithin drehfest mit dem Unterwagen 2 verbunden. Mit dem Oberwagen sind die Zylinder 36 verbunden sowie eine Buchse 63, welche die Welle 38 dichtend umgibt. Die Welle 38 hat im unteren Bereich einen radialen Bund 64, gegen den die Buchse 63 anliegt. Die Welle 3 8 weist eine Reihe von axialen bzw. achsparallelen Bohrungen 65 auf, die mit Querbohrungen 66 im Bund 64 verbunden sind. Die axiale Bohrung 65 ist unmittelbar nach außen geführt. Die Längsbohrungen 65 in der Welle 38 weisen jeweils eine Querbohrung 67 auf, die zu inneren Ringnuten 68 der Buchse 63 ausgerichtet sind. Die Ringnuten 68 stehen ihrerseits mit Querbohrungen 69 der Buchse 63 in Verbindung. Mit den Bohrungen 65 und 66 sind vom Hinterwagen 5 kommende Hydraulikleitungen verbunden. Die zu den einzelnen Hydraulikzylindern des Oberwagens 2 führenden Hydraulikleitungen sind hingegen mit den Querbohrungen 69 der Buchse 63 verbunden. Die Ritzelwelle 38 bildet daher gleichzeitig eine Drehverbindung für die Hydraulikleitungen. Dadurch, daß die Zylinder 36 mit dem Oberwagen 2 verbunden sind, ist nicht mehr notwendig, deren Leitungen durch die Drehverbindung wieder nach unten zu führen.

Der Fahrantrieb 21 ist im einzelnen nicht dargestellt. Er ist so ausgelegt, daß eine relativ hohe Geschwindigkeit auf üblichen Fahrbahnen erreicht werden kann, beispielsweise 60 km/h und mehr. Zu diesem Zweck sind die Stützzylinder 26 bis 29 über die geöffneten Ventile 30, 30a mit den Speichern 31 verbunden, die von der Pumpe 33 mit Druck versorgt werden. Die Druckbegrenzungsventile 34 stellen den maximalen Druck ein und bestimmen somit die Federcharakteristik der Radaufhängung. Das Fahrzeug ist auf diese Weise ausreichend gefedert, um den Erschütterungen bei hohen Geschwindigkeiten gewachsen zu sein und lenkbar zu bleiben. Die Lenkung erfolgt über nicht gezeigte Lenkzylinder, die zwischen Vorderwagen 1 und Hinterwagen 5 angeordnet sind und die beiden Wagen 1, 5 um die Achse 7 gegeneinander verschwenken. Ein Knickpendellager ermöglicht normalerweise ein Verschränken der Vorder- und Hinterachsen eines Fahrzeugs. Für den Fahrbetrieb ist dies unerwünscht, wenn beide Achsen federnd aufgehängt sind. Mit dem Schaltgetriebe im Vorderwagen 1 ist ein zusätzliches Blockierventil (nicht dargestellt) gekoppelt. Im Fahrbetrieb wird es so eingestellt, daß die Blockierzylinder 12, 13 blockiert sind. Dadurch vermögen Vorderwagen 1 und Hinterwagen 5 um die Achse 7 weiterhin zu schwenken, ein Pendeln um eine Achse senkrecht dazu wird hingegen vermieden. Wird hingegen das Schaltgetriebe auf Arbeitsstellung geschaltet, sind die Blockierzylinder 12, 13 über das Blockierventil 14 miteinander verbunden, so daß zur Erzielung einer ausreichenden Geländegängigkeit Vorder- und Hinterwagen auch gegeneinander pendeln können. Außerdem werden die Ventile 30, 30a und 32 so betätigt, daß die Stützzylinder 26 bis 29 abgesperrt sind und mithin als starre Stützen wirken. Eine Abfederung im Arbeitsbetrieb findet nicht mehr statt.

Wird der Oberwagen 2 um einen bestimmten Winkel, zum Beispiel 30° verschwenkt, gelangt die Nockenrolle 44 bzw. 45 mit dem Nocken 16 bzw. 17 in Eingriff. Durch Betätigung des Blockierventils 14 wird der betreffende Blockierzylinder, zu dessen Seite der Ausleger schwenkt, mit dem Hubraum des Hubzylinders 18 und der andere mit dem Pumpensumpf verbunden. Einer der Blockierzylinder 12, 13 wird daher in Abhängigkeit vom Druck des Hubzylinders 18 beaufschlagt. Er verhindert, daß das Fahrzeug aufgrund einer Pendelbewegung bei seitlichem Lastmoment umkippt. Vielmehr wird dadurch erreicht, daß unabhängig von der Last und vom Verschwenkwinkel alle vier Räder des Fahrzeugs in Bodenberührung bleiben.

Bei der Ausführungsform nach den Figuren 6 bis 8 weist das Vielzweckgerät lediglich ein Knickgelenk auf. Es besitzt zwei parallele übereinanderliegende Laschen 7a, 7b, die in zwei Drehgelenken 7c, 7d am Vorderwagen drehbar gelagert sind. Alle übrigen Teile entsprechen denen nach Fig. 1, so daß gleiche Bezugszeichen verwendet worden sind. Auf die erneute Beschreibung wird verzichtet.

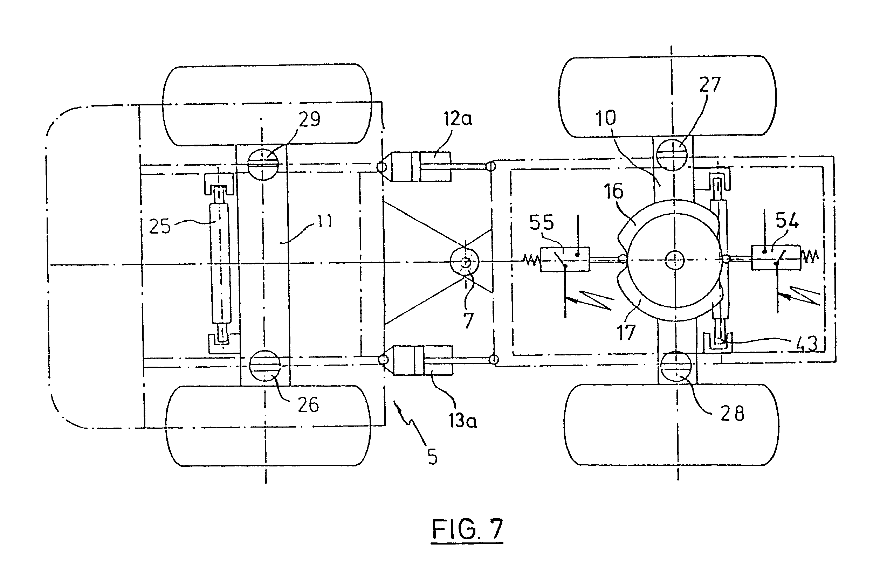

Aus Fig. 7 ist zu erkennen, daß den Nocken 16, 17 zwei Nockenschalter 54, 55 zugeordnet sind. Wie zu erkennen, sprechen die Nockenschalter 54, 55 bei einem unterschiedlichen Schwenkwinkel des Oberwagens 2 an. Der Schalter 55 spricht bereits bei einem kleinen Schwenkwinkel des Oberwagens an, während der zweite Schalter 54 bei einem größeren Schwenkwinkel anspricht, beispielsweise bei einem Winkel von 30°.

Wie aus Fig. 7 zu erkennen, sind die Lenkzylinder 12a, 13a gezeigt, die Vorder- und Hinterwagen miteinander verbinden, um das Fahrzeug lenkbar zu gestalten.

Auch die hydraulische Steuerung der Stützzylinder für die Vorder- und Hinterachse entspricht annähernd der nach der Ausführungsform nach Fig. 3. In Abänderung zur Ausführungsform nach Fig. 3 ist folgendes zu bemerken. Im Fahrbetrieb sind, wie bereits beschrieben, die Stützzylinder 26 bis 29 mit den Druckspeichern 31 über die entsprechenden Ventile 30 verbunden. Im Arbeitsgang indessen werden die Ventile 30 für die Stützzylinder 27, 28 der Vorderachse gesperrt, so daß die Stützzylinder 27, 28 blockiert sind, wenn ein Nockenschalter 55 anspricht. Dies ist bereits bei einem kleinen Schwenkwinkel des Oberwagens der Fall. Auch die Ventile 30 werden gesperrt. Die Ventile 30a für die Stützzylinder 26, 29 bleiben jedoch geöffnet, so daß die Stützzylinder 26, 29 miteinander in Verbindung sind. Der Hinterwagen kann dadurch gegenüber dem Vorderwagen begrenzt pendeln und damit Geländeunebenheiten ausgleichen. Erreicht während des Betriebs der Schwenkwinkel des Oberwagens einen bestimmten Winkelwert, der durch den Nockenschalter 54 angezeigt wird, werden auch die Ventile 30a für die Stützzylinder 26, 29 gesperrt, so daß diese Stützzylinder ebenfalls blockiert sind. Hierbei ist das gesamte Fahrzeug starr abgestützt, so daß die Gefahr eines Kippens verringert ist.

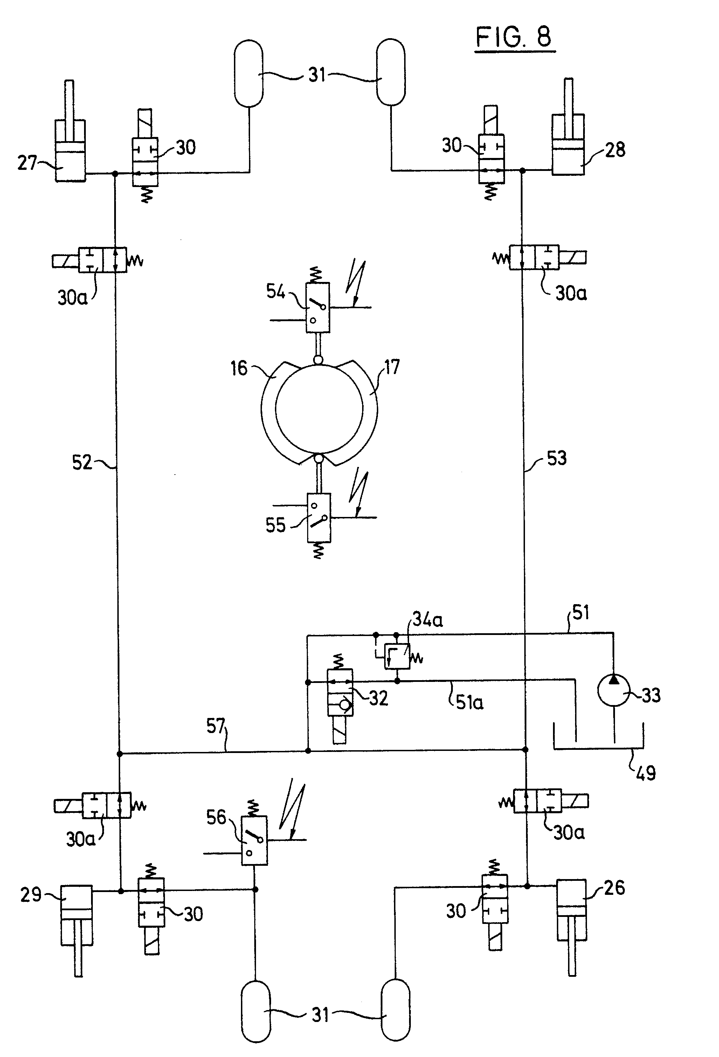

Aus Fig. 8 ist außerdem zu entnehmen, daß die Hydraulikpumpe 33 von einem Druckbegrenzungsventil 34a überbrückbar ist. Außerdem ist gezeigt, daß dem Speicher 31 ein Druckschalter 56 zugeordnet ist, der das Magnetventil 32 auf Umlauf schaltet, so daß die Pumpe 33 drucklos in den Sumpf 49 zurückfördert. Es versteht sich, daß allen Speichern 31 ein derartiger Druckschalter zugeordnet sein kann. Wie bei der Ausführungsform nach Fig. 3 können auch hier die Magnetventile 30 und 30a durch Handschalter geschaltet werden, um die Stützzylinder 26 bis 29 - nach dem Absperren der Speicher 31 - beliebig ein- bzw. ausfahren zu können, wenn das Gerät auf unebenem Boden horizontal gestellt werden soll.

## Ansprüche

1. Selbstfahrendes Vielzweckgerät mit einem Vorderwagen (1), der einen mittels Hubzylinder (18) betätigbaren Ausleger (1a) aufweist, an dem unterschiedliche Arbeitsgeräte (42) anbringbar sind und der eine Radachse (10) für die Vorderräder lagert, einem Hinterwagen (5), der eine Radachse (11) für die Hinterräder lagert und der mit dem Vorderwagen über ein Knickpendelgelenk verbunden ist, einem über eine Schaltung betätigbaren Fahrantrieb auf dem Hinterwagen, wobei zwischen Vorder- und Hinterwagen ein doppelt wirkender oder zwei einfache Lenkzylinder angeordnet sind zur Veränderung des Knickwinkels, dadurch gekennzeichnet, daß der Vorderwagen (1) einen um eine vertikale Achse schwenkbaren Oberwagen (2) aufweist, der den Ausleger (19) trägt, zwischen Hinter- und Vorderwagen (5, 1) ein doppelt wirkender oder zwei einfache Blockierzylinder (12, 13) so angeordnet sind, daß die Pendelbewegung zwischen Vorder- und Hinterwagen blockierbar ist, dem Oberwagen (2) eine mit einem Blockierventil (14) verbundene Meßfühleranordnung (16, 17, 44, 45) zugeordnet ist derart, daß der Hubzylinder (18) über das Blockiersteuerventil wahlweise mit den doppelt wirkenden oder den einfachen Blockierzylindern (12, 13) verbunden ist, wenn der Schwenkwinkel des Oberwagens (2) einen vorgegebenen Wert überschreitet, mindestens die Vorderachse (10) mittels Längslenkern (24) pendelnd aufgehängt ist, die Vorderachse (10) mittels Stützzylinder (27, 28) am Rahmen des Vorderwagens abgestützt ist, die Stützzylinder (27, 28) über eine Steuerventilanordnung mit hydropneumatischen Speichern (31) verbunden sind, die Steuerventilanordnung mit dem Schaltgetriebe verbunden ist, wodurch die Steuerventilanordnung die Verbindung der Stützzylinder (27, 28) mit den Speichern (31) herstellt, wenn auf Straßengang geschaltet ist und die Steuerventilanordnung die Stützzylinder sperrt, wenn die Schaltung auf Arbeitsgang geschaltet ist.

2. Gerät nach Anspruch 1, dadurch gekennzeichnet, daß auch die Hinterachse (11) mittels Längslenkern (23) pendelnd aufgehängt und mittels Stützzylindern (26, 29) am Rahmen des Hinterwagens (5) abgestützt ist, die Stützzylinder (26, 29) im Fahrbetreib über die Steuerventilanordnung mit einem hydropneumatischen Speicher (31) verbunden, im Arbeitsbetrieb hingegen gesperrt sind, ein zweites Blockierventil mit dem Schaltgetriebe so verbunden ist, daß die Blockierzylinder (12, 13) im Fahrbetrieb in den Blockierzustand gebracht sind.

3. Selbstfahrendes Vielzweckgerät mit einem Vorderwagen (1), der einen mittels Hubzylinder (18) betätigbaren Ausleger (19) aufweist, an dem unterschiedliche Arbeitsgeräte (42) anbringbar sind und der eine Radachse (10) für die Vorderräder lagert, einem Hinterwagen (5), der eine Radachse (11) für die Hinterräder lagert und der mit dem Vorderwagen über ein Gelenk verbunden ist, einem über eine Schaltung betätigbaren Fahrantrieb auf dem Hinterwagen, wobei zwischen Vorder-und Hinterwagen ein doppelt wirkender oder zwei einfache Lenkzylinder (12a, 13a) angeordnet sind zur Veränderung des Knickwinkels, dadurch gekennzeichnet, daß der Vorderwagen (1) einen um eine vertikale Achse schwenkbaren Oberwagen (2) aufweist, der den Ausleger (19) trägt, Hinter- und Vorderwagen (5, 1) nur über ein Knickgelenk verbunden sind, dem Oberwagen (2) eine auf die Auslenkung ansprechende, mit einer Steuerventilanordnung verbundene Meßfühleranordnung (16, 17, 54, 55) zugeordnet ist, mindestens die Vorderachse (10) mittels Längslenkern (24) pendelnd aufgehängt ist, mindestens die Vorderachse (10) mittels Stützzylinder (27, 28) am Rahmen des Vorderwagens abgestützt ist, die Stützzylinder (27, 28) über die Steuerventilanordnung mit hydropneumatischen Speichern (31) verbunden sind, die Steuerventilanordnung mit dem Schaltgetriebe verbunden ist, wodurch die Steuerventilanordnung die Verbindung der Stützzylinder (27, 28) mit den Speichern (31) herstellt, wenn auf Straßengang geschaltet ist und die Steuerventilanordnung die Stützzylinder (26 bis 29) blockiert, wenn der Schwenkwinkel des Oberwagens einen ersten vorgegebenen Wert überschreitet.

4. Gerät nach Anspruch 3, dadurch gekennzeichnet, daß die Hinterachse (11) mittels Längslenkern (23) pendelnd aufgehängt ist und mittels Stützzylinder (26, 29) am Rahmen des Hinterwagens (5) abgestützt ist, die Stützzylinder (26, 29) im Fahrbetrieb über die Steuerventilanordnung mit einem hydropneumatischen Speicher (31) verbunden, hingegen blockiert sind, wenn der Schwenkwinkel des Oberwagens einen zweiten vorgegebenen Wert, der größer als der erste ist, überschreitet, jedoch miteinander verbunden sind, wenn der erste Schwenkwinkelwert überschritten ist.

5. Gerät nach Anspruch 1 oder 2, dadurch gekennzeichnet, daß das Knickpendelgelenk eine erste Pendellasche (41) aufweist, die am Hinterwagen (5) fest angebracht und am Vorderwagen (1) über ein Kugelgelenk (4) angelenkt ist sowie eine zweite Pendellasche (8), die jeweils über Kugelgelenke (6, 9) am Vorder- und Hinterwagen (1, 5) angelenkt ist.

6. Gerät nach einem der Ansprüche 1 bis 5, dadurch gekennzeichnet, daß die mittels Längslenker (24, 23) gelagerten Achsen mit einem am Rahmen angelenkten Querlenker (43, 25) stabilisiert sind.

7. Gerät nach einem der Ansprüche 1 bis 6, dadurch gekennzeichnet, daß die vorgegebenen Schwenkwinkel veränderbar sind und der zweite Schwenkwinkel z.B. 30° beträgt.

8. Gerät nach einem der Ansprüche 1 bis 7, dadurch gekennzeichnet, daß mit einem den Oberwagen abstützenden Drehkranz (3) Nokken (16, 17) zusammenwirken, die ihrerseits auf das Blockiersteuerventil (14) bzw. die Steuerventilanordnung wirken.

9. Gerät nach einem der Ansprüche 1 bis 8, dadurch gekennzeich net, daß der Steuerventilanordnung eine Handbetätigung zugeordnet ist, über die einer der Stützzylinder mit der Druckquelle (33) und der andere gleichzeitig mit dem Pumpensumpf (49) verbindbar ist zur Nivelierung der Vorderachse bei abgesperrtem Speicher (31).

10. Gerät insbesondere nach einem der Ansprüche 1 bis 9, dadurch gekennzeichnet, daß die Fahrerkabine (20) auf dem Oberwagen (2) und der Antrieb (21) auf dem Hinterwagen (5) angeordnet sind, der Hinterwagen (5) eine Ablagefläche (22) für Arbeitsgeräte aufweist und der Oberwagen (2) um einen Winkel von mindestens ± 180° verschwenkbar ist.

11. Gerät nach Anspruch 10, dadurch gekennzeichnet, daß im Unterwagen (40) des Vorderwagens (1) ein Ritzel (60) mit vertikaler Achse angeordnet ist, mit dem Ritzel (60) zwei gegenläufige, hydraulisch betätigbare, mit dem Ober- oder dem Unterwagen verbundene Zahnstangen (34) in Eingriff sind und die Ritzelwelle (38) fest mit dem Unter- oder dem Oberwagen (2) verbunden ist.

12. Gerät nach Anspruch 11, dadurch gekennzeichnet, daß die Ritzelwelle (38) Längsbohrungen (65) aufweist, die mit Hydraulikleitungen des Unterwagens (40) verbunden sind, die Ritzelwelle (38) von einer Buchse (63) umgeben ist, die mit dem Oberwagen (2) verbunden ist und die innere Ringkanäle (68) aufweist, die über Querbohrungen (67) in der Ritzelwelle mit deren Längsbohrungen verbunden sind und die über Querbohrungen (69) in der Buchse (63) mit vom Oberwagen (2) kommenden Hydraulikleitungen verbunden sind.

**Claims**

1. Self-propelled multipurpose device comprising a front vehicle (1) which is provided with an arm (19) adapted to be actuated by a hold-up cylinder (18), on which different implements (42) can be attached, and which carries a wheel axle (10) for the front wheels, a rear vehicle (5) carrying a wheel axle (11) for the rear wheels, and being connected with the front vehicle by means of a buckling pendulum joint, a drive adapted to be actuated by a gear shift and arranged on the rear vehicle, with one double acting or two simple steering cylinders being arranged between the front and rear vehicle in order to alter the turn angle, characterized in that the front vehicle (1) includes an upper carriage (2) being rotatable round a vertical axis and carrying the arm (19), one double acting or two simple blocking cylinders (12, 13) are thus arranged between the rear and front vehicle (5, 1) that pendulum motion between the front and rear vehicle can be blocked, a sensory equipment (16, 17, 44, 45) connected to a lock out valve (14) is assigned to the upper carriage (2) so that the hold-up cylinder (18) is connected alternatively to the double acting or the simple blocking cylinders (12, 13) by means of the lock out control valve if the turn angle of the upper carriage (2) exceeds a predetermined amount, at least the front axle (10) is arranged to oscillate by means of longitudinal control arms (24), the front axle (10) is supported on the chassis of the front vehicle by means of supporting cylinders (27, 28), the supporting cylinders (27, 28) are connected to hydropneumatic storages (31) by means of a control valve assembly, the control valve assembly is connected to the gear box, with the control valve assembly connecting the supporting cylinders (27, 28) with the storages (31) if the driving gear is selected, and the control valve assembly blocking the supporting cylinders if the gear shift is shifted into the working gear.

2. Device according to claim 1, characterized in that the rear axle (11) is also arranged to oscillate by means of longitudinal control arms (23), and is supported on the chassis of the rear vehicle (5) by means of supporting cylinders (26, 29), the supporting cylinders (26, 29) are connected to a hydropneumatic storage (31) by means of the control valve assembly if the driving gear is selected, but the supporting cylinders are blocked if the working gear is selected, a second lock out valve is thus connected to the gear box that the blocking cylinders (12, 13) are blocked if the driving gear is selected.

3. Self-propelled multi-purpose device comprising a front vehicle (1) which is provided with an arm (19) adapted to be actuated by a hold-up cylinder (18), on which different implements (42) can be attached, and which carries a wheel axle (10) for the front wheels, a rear vehicle (5) carrying a wheel axle (11) for the rear wheels and being connected to the front vehicle by means of a joint, a drive adapted to be actuated by a gear shift and arranged on the rear vehicle, with one double acting or two simple steering cylinders (12a, 13a) being arranged between the front and the rear vehicle in order to alter the turn angle, characterized in that the front vehincle (1) includes an upper carriage (2) being rotatable round a vertical axis and carrying the arm (19), rear and front vehicle (5, 1) are only connected together by a buckling joint, a sensory equipment (16, 17, 54, 55) connected to a control valve assembly and responding to the sweep is assigned to the upper carriage (2), at least the front axle (10) is arranged to oscillate by means of longitudinal control arms (24), at least the front axle (10) is supported on the chassis of the front vehicle by means of supporting cylinders (27, 28), the supporting cylinders (27, 28) are attached to hydropneumatic storages (31) by means of the control valve assembly, the control valve assembly is connected to a gear box, with the control valve assembly connecting the supporting cylinders (27, 28) with the storages (31) if the driving gear is selected, and the control valve assembly blocking the supporting cylinders (26 to 29) if the turn angle of the upper carriage exceeds a first predetermined amount.

4. Device according to claim 3, characterized in that the rear axis (11) is arranged to oscillate by means of longitudinal control arms (23) and is supported on the chassis of the rear vehicle (5) by means of supporting cylinders (26, 29), the supporting cylinders (26, 29) are connected to a hydropneumatic storage (3l) by means of the control valve assembly if the driving gear is selected, but the supporting cylinders are blocked if the turn angle of the upper carriage exceeds a second predetermined amount which is larger than the first one, but they are connected if the first amount of the turn angle is exceeded.

5. Device according to claim 1 or 2, characterized in that the buckling pendulum joint includes a first pendulum piece (41) rigidly mounted on the rear vehicle (5) and hinged on the front vehicle (1) by a ball-and-socket joint (4), and a second pendulum piece (8) hinged on both the front vehicle (1) and the rear vehicle (5) by means of ball-and-socket joints (6, 9).

6. Device according to one of the claims 1 to 5, characterized in that the axes arranged by longitudinal control arms (24, 23) are stabilized by a transverse control arm (43, 25) hinged on the chassis.

7. Device according to one of the claims 1 to 6, characterized in that the predetermined turn angles are changeable and the second turn angle is e.g. about $30^\circ$.

8. Deviced according to one of the claims 1 to 7, characterized in that cams (16, 17) coact with a circular track (3) supporting the upper carriage, and act on the lock out control valve (14) and the control valve assembly, respectively.

9. Device according to one of the claims 1 to 8, characterized in that one of the supporting cylinders can be attached to the pressure source (33) and the other one can be simultaneously attached to the pump cavity (49) by means of a manual control which is assigned to the control valve assembly, for leveling the front axis if the storage (31) is blocked.

10. Device according to one of the claims 1 to 9, characterized in that the driver's cab (20) is arranged on the upper carriage (2) and the drive (21) is arranged on the rear vehicle (5), the rear vehicle (5) includes a receiving area (22) for implements, and the upper carriage (2) is rotatable round an angle of at least ± 180°.

11. Device according to claim 10, characterized in that a pinion wheel (60) having a vertical axis is provided in the lower carriage (40) of the front vehicle (1), two counterrotating hydraulically controllable racks (34) attached to the upper and lower carriage engage the pinion wheel (60), and the pinion shaft (38) is firmly attached to the lower or the upper carriage (2).

12. Device according to claim 11, characterized in that the pinion shaft (38) comprises longitudinal bores (65) which are connected to the hydraulic lines of the lower carriage (40), the pinion shaft (38) is surrounded by a socket (63) which is connected to the upper carriage (2) and comprises inner circular passages (68) which communicate with the longitudinal bores of the pinion shaft by means of transverse bores (67) provided in the pinion shaft and which communicate with the hydraulic lines directed from the upper carriage (2), by means of transverse bores (69).

**Revendications**

1. Véhicule automobile polyvalent comprenant :
   un chariot avant (1), qui comporte un bras (19) actionnable au moyen d'un vérin de levée (18) sur lequel peuvent être montés divers dispositifs de travail (42), ce chariot avant portant un essieu (10) pour les roues avant,
   un chariot arrière (5) sur lequel est monté un essieu (11) pour les roues arrière et qui est relié au chariot avant par une articulation flottante,
   un moyen d'entraînement en déplacement situé sur le chariot arrière, actionnable par l'intermédiaire d'un commutateur,
   un vérin articulé à double action, ou deux vérins articulés à simple action, étant disposés entre les chariots avant et arrière pour modifier l'angle d'articulation,
   caractérisé en ce que le chariot avant comporte un chariot supérieur (2), pivotant autour d'un axe vertical et portant le bras (19),
   en ce qu'un vérin de blocage à double action, ou deux vérins de blocage simples (12, 13), sont disposés entre les chariots arrière et avant (5, 1) de telle manière que le mouvement de flottement entre les chariots avant et arrière puisse être bloqué,
   en ce qu'un dispositif détecteur (16, l7, 44, 45) relié à une valve de blocage (14) est associé au chariot supérieur (2) de telle manière que le vérin de levage (18) est relié à volonté, par la valve de commande de blocage, au vérin de blocage à double action ou aux vérins de blocage simples (12, 13) lorsque l'angle de pivotement du chariot supérieur (2) dépasse une valeur prédéterminée,
   en ce qu'au moins l'essieu avant (10) est suspendu de manière flottante au moyen d'articulations longitudinales (24),
   en ce que l'essieu avant (10) est supporté sur le cadre du chariot avant au moyen de vérins d'appui (27, 28),
   en ce que les vérins d'appui (27, 28) sont reliés par un dispositif de valve de commande à des accumulateurs hydropneumatiques (31),
   en ce que le dispositif de valve de commande est relié au mécanisme de commutation, grâce à quoi le dispositif de valve de commande établit la liaison des vérins d'appui (27, 28) avec les accumulateurs (31) lors d'une commutation sur une position de déplacement sur route
   et en ce que le dispositif de valve de commande bloque les vérins de support lorsque la commutation est faite sur la position de travail.

2. Dispositif selon la revendication 1, caractérisé en ce que l'essieu arrière (11) est également suspendu de manière flottante au moyen d'articulations longitudinales (23) et s'appuie, au moyen de vérins d'appui (26, 29), sur le châssis du chariot arrière,
   en ce que les vérins d'appui (26, 29) sont reliés, lors du fonctionnement en position de déplacement à un accumulateur hydropneumatique (31) par l'intermédiaire du dispositif de valve de commande, et sont au contraire bloqués lors du fonctionnement en position de travail,
   en ce qu'une deuxième valve de blocage est reliée au dispositif de commutation de telle manière que les vérins de blocage (12, 13) sont amenés dans l'état de blocage lors du fonctionnement en position de déplacement.

3. Véhicule automobile polyvalent comprenant :
   un chariot avant (1), qui comporte un bras (19) actionnable au moyen d'un vérin de levée (18), sur lequel peuvent être montés divers dispositifs de travail (42), ce chariot avant portant un essieu (10) pour les roues avant,
   un chariot arrière (5) sur lequel est monté un essieu (11) pour les roues arrière et qui est relié au chariot avant par une articulation,

un moyen d'entraînement en déplacement sur le chariot arrière, actionnable par l'intermédiaire d'un commutateur,

un vérin articulé à double action ou deux vérins simples, articulés, étant disposés entre les chariots avant et arrière pour modifier l'angle d'articulation,

caractérisé en ce que le chariot avant comporte un chariot supérieur (2), pivotant autour d'un axe vertical et portant le bras (19),

en ce que les chariots arrière et avant (5, 1) ne sont reliés que par l'intermédiaire d'une articulation à suspension flottante,

en ce qu'un dispositif de détection (16, 17, 54, 55) relié à un dispositif de valve de commande, sensible à la situation de l'articulation, est associé au chariot supérieur,

en ce qu'au moins l'essieu avant (10) est suspendu de façon flottante au moyen d'articulations longitudinales (24),

en ce qu'au moins l'essieu avant (10) est supporté au moyen de vérins d'appui (27, 28) par le châssis du chariot avant,

en ce que les vérins d'appui (27, 28) sont reliés à des accumulateurs hydropneumatiques (31) par l'intermédiaire du dispositif de valve de commande,

en ce que le dispositif de valve de commande est relié au mécanisme de commutation, grâce à quoi le dispositif de valve de commande établit la liaison des vérins d'appui (27, 28) avec les accumulateurs (31) lors d'une commutation sur une position de déplacement sur route

et en ce que le dispositif de valve de commande bloque les vérins de support (26 à 29) lorsque la commutation est faite sur la position de travail.

4. Dispositif selon la revendication 3, caractérisé en ce que l'essieu arrière (11) est suspendu de façon flottante au moyen d'articulations longitudinales (23) et est supporté au moyen de vérins d'appui (26, 29) sur le cadre du chariot arrière (5),

en ce que les vérins d'appui (26, 29) sont reliés, en fonctionnement, à un accumulateur hydropneumatique (31) par l'intermédiaire du dispositif de valve de commande,

en ce qu'ils sont, par contre, bloqués lorsque l'angle de pivotement du chariot avant dépasse une deuxième valeur prédéterminée qui est supérieure à la première valeur, mais qu'ils sont reliés entre eux lorsque la première valeur d'angle de pivotement est dépassée.

5. Dispositif selon la revendication 1 ou 2, caractérisé en ce que l'articulation flottante comporte un premier axe (41) d'articulation flottante, qui est monté de façon fixe sur le chariot arrière (5) et est articulé sur le chariot avant (1) au moyen d'une articulation à rotule (44), ainsi qu'un deuxième axe d'articulation flottante (8) qui est respectivement articulé sur le chariot avant et le chariot arrière (1, 5) par des articulations à rotule (6, 9).

6. Dispositif selon l'une des revendications 1 à 5, caractérisé en ce que les essieux montés aux moyens de bras longitudinaux (23, 24) sont stabilisés à l'aide d'un bras transversal (43, 25) monté sur le châssis.

7. Dispositif selon l'une des revendications 1 à 6, caractérisé en ce que les angles de pivotement prédéterminés sont modifiables et le deuxième angle de pivotement est par exemple de 30°.

8. Dispositif selon l'une des revendications 1 à 7, caractérisé en ce que des saillies (16, 17), qui agissent sur la valve de commande de blocage (14) ou le dispositif de valve de commande, coopèrent avec une couronne tournante (3) supportant le chariot supérieur.

9. Dispositif selon l'une des revendications 1 à 8, caractérisé en ce qu'est associé au dispositif de valve de commande un actionnement manuel au moyen duquel on peut relier l'un des vérins d'appui à la source de pression (33) et l'autre, simultanément, à l'aspiration de pompe (49) en vue d'une mise à niveau de l'essieu quand l'accumulateur (31) est bloqué.

10. Dispositif en particulier selon l'une des revendications 1 à 9, caractérisé en ce que la cabine du conducteur (20) est disposée sur le chariot supérieur (2) et le moyen d'entraînement (21) est disposé sur le chariot arrière (5), le chariot arrière (5) comporte une surface (22) prévue pour y déposer des dispositifs de travail, et le chariot supérieur (2) peut pivoter d'un angle d'au moins ± 180°.

11. Dispositif selon la revendication 10, caractérisé en ce qu'il est disposé, dans le chariot inférieur (40) du chariot avant, un pignon (60) à axe vertical avec lequel sont engrenées deux crémaillères (34) mobiles en sens opposés, actionnables hydrauliquement, respectivement reliées au chariot supérieur et au chariot inférieur, et en ce que l'arbre de pignon (38) est relié de façon fixe au chariot inférieur ou au chariot supérieur (2).

**12.** Dispositif selon la revendication 11, caractérisé en ce que l'arbre de pignon (38) comporte des alésages longitudinaux (65), qui sont reliés à des conduites hydrauliques du chariot inférieur (40), en ce que l'arbre de pignon (38) est entouré par une douille (63) qui est reliée au chariot supérieur (2) et qui présente des canaux annulaires (68) qui sont reliés, par des alésages transversaux (67) de l'arbre de pignon, aux alésages longitudinaux de ce dernier, et qui sont reliés, par des alésages transversaux (69) de la douille (63), à des conduites hydrauliques venant du chariot supérieur (2).

FIG.1

EP 0 266 785 B1

FIG.2

FIG.3

69

63

68

67

66

64

_FIG.4_

38      65

36      35      38      34      35      36

36      35      60      34      35      36

61      62

37

33

_FIG.5_

FIG. 6

FIG. 7

<u>FIG. 8</u>